# EUROPÄISCHE PATENTSCHRIFT

(11) **EP 1 786 935 B1**
(45) Veröffentlichungstag und Bekanntmachung des Hinweises auf die Patenterteilung: **16.11.2011**
(21) Anmeldenummer: 05767557.1
(22) Anmeldetag: 30.07.2005
(51) Int. Cl.: C21D 1/19, C21D 1/84

(54) **VERFAHREN ZUR WAERMEBEHANDLUNG VON WAELZLAGERBAUTEILEN AUS STAHL**
METHOD FOR THE HEAT TREATMENT OF BEARING PARTS MADE OF STEEL
PROCEDE POUR TRAITER THERMIQUEMENT DES PIECES DE ROULEMENT EN ACIER

(30) Priorität: 06.08.2004 DE 102004038159
(43) Veröffentlichungstag der Anmeldung: 23.05.2007
(73) Patentinhaber: AB SKF, 415 50 Göteborg (SE)
(72) Erfinder: VOLKMUTH, Johann, 97618 Niederlauer (DE); GOEBEL, Martin, 97456 Dittelbrunn (DE)
(74) Vertreter: Kohl, Thomas
(86) Internationale Anmeldenummer: PCT/EP2005/008291
(87) Internationale Veröffentlichungsnummer: WO 2006/015749

(56) Entgegenhaltungen:
- EP-A- 0 896 068
- DE-A1- 1 433 715
- DE-A1- 2 501 175
- DE-A1- 10 048 234
- DE-C1- 19 849 681

## Beschreibung

Die Erfindung betrifft ein Verfahren zur Wärmebehandlung von Wälzlagerbauteilen aus Stahl.

Verfahren zur Wärmebehandlung von Werkstücken aus Stahl oder Gusseisen sind in vielfältigen Ausführungen bekannt. Die Wärmebehandlung dient insbesondere der Erhöhung der Härte der Werkstücke. Dabei hat die Art der Wärmebehandlung großen Einfluss auf die Eigenschaften der Werkstücke, so dass die Wahl eines geeigneten Wärmebehandlungsverfahrens, neben der Wahl einer geeigneten Zusammensetzung des Stahls bzw. des Gusseisens, von wesentlicher Bedeutung für die Brauchbarkeit der Werkstücke ist. Dies gilt im besonderen Maße für Werkstücke wie beispielsweise Wälzlagerteile, die hohe Qualitätsanforderungen erfüllen müssen und über eine lange Einsatzzeit hohen Beanspruchungen ausgesetzt sind. Bei derartigen Werkstücken kann die Qualität sehr empfindlich von den Details der Wärmebehandlung abhängen. Wichtige Kriterien zur Beurteilung der Qualität der Werkstücke sind deren Festigkeit, Gebrauchsdauer und Gefügestabilität gegen Alterung

Ein gängiges Wärmebehandlungsverfahren, das im Sinne einer möglichst guten Erfüllung der genannten und/oder weiterer Qualitätskriterien in vielfältiger Weise mit weiteren Maßnahmen zur Wärmebehandlung kombiniert wird, stellt das Bainitisieren dar. Wie beispielsweise aus der EP 0 896 068 B1 oder der DE 198 49 681 C1 bekannt ist, werden die Werkstücke hierzu auf Austenitisierungstemperatur erwärmt und eine Zeit lang bei dieser Temperatur gehalten. Anschließend erfolgt ein Abschrecken auf eine Temperatur knapp oberhalb der Martensit-Starttemperatur. Danach werden die Werkstücke bis zum Ende der Umwandlung konstant bei dieser Temperatur gehalten und schließlich auf Raumtemperatur abgekühlt.

Die EP 0 896 068B1 offenbart weiterhin, die Temperatur der Werkstücke vor dem Ende der Umwandlung des Austenits in Bainit zu erhöhen, um die Umwandlung des restlichen Austenits zu beschleunigen.

Aus der DE 198 49 681 C1 ist es bekannt, die Werkstücke vor dem Ende der Umwandlung des Austenits in Bainit rasch auf Raumtemperatur abzukühlen. Nach einer kurzen Haltedauer auf Raumtemperatur schließt sich ein Kurzzeitanlassen an.

Trotz der günstigen Eigenschaften, die sich mit dem Bainitisieren erzielen lassen, wirkt es sich bei manchen Anwendungsfällen negativ aus, dass die erreichte Härte in der Regel geringer ist als dies beim Martensit-Härten der Fall ist.

Der Erfindung liegt die **Aufgabe** zugrunde, eine Wärmebehandlung von Wälzlagerbauteilen aus Stahl so zu gestalten, dass sich mit einem vertretbaren Aufwand hohe Qualitätsanforderungen erfüllen lassen und dadurch eine lange Gebrauchsdauer der Wälzlagerbauteile ermöglicht wird. Insbesondere soll beim Bainitisieren eine möglichst hohe Härte erreicht werden und/oder eine möglichst kurze Haltedauer ausreichen.

Diese Aufgabe wird durch ein Verfahren mit der Merkmalskombination des Anspruchs 1 gelöst.

Beim erfindungsgemäßen Verfahren zur Wärmebehandlung von Wälzlagerbauteilen aus Stahl werden die Wälzlagerbauteile nach einer Haltedauer bei oder oberhalb der Austenitisierungstemperatur auf eine Temperatur oberhalb der Martensit-Starttemperatur, bei deren Unterschreitung Martensit gebildet wird, abgeschreckt. In einem sich anschließenden Zeitintervall erfolgt eine Umwandlung von Austenit in Bainit. Die Besonderheit des erfindungsgemäßen Verfahrens besteht darin, dass die Temperatur der Wälzlagerbauteile während des Zeitintervalls der Umwandlung abgesenkt und die Umwandlung von Austenit in Bainit dabei fortgesetzt wird.

Die Erfindung hat den Vorteil, dass eine gegenüber dem isothermen Bainitisieren höhere Härte erreichbar ist. Dadurch erhöht sich die Lebensdauer der so behandelten Wälzlagerbauteile.

Insbesondere wird die Temperatur der Wälzlagerbauteile wenigstens während eines Zeitanteils von 20 % der Umwandlungsdauer auf Werte unterhalb der Temperatur abgesenkt, die durch das Abschrecken erzielt wird.

Die Temperatur der Wälzlagerbauteile wird vorzugsweise abhängig von der Martensit-Starttemperatur abgesenkt. Insbesondere wird die Temperatur der Wälzlagerbauteile jeweils auf Werte oberhalb der Martensit-Starttemperatur abgesenkt, um die Bildung von Martensit zu vermeiden. Dadurch kann bei den Wälzlagerbauteilen eine Bildung von Mischgefügen vermieden werden.

Besonders vorteilhaft ist es, wenn die Temperatur der Wälzlagerbauteile gemäß einem vorgegebenen Temperaturprofil abgesenkt wird. Auf diese Weise lassen sich mit dem erfindungsgemäßen Wärmebehandlungsverfahren optimale und reproduzierbare Ergebnisse erzielen. Beispielsweise kann die Temperatur der Wälzlagerbauteile stufenweise abgesenkt werden. Diese Variante lässt sich mit einem relativ geringen Aufwand realisieren. Eine Realisierungsmöglichkeit besteht darin, die Wälzlagerbauteile zur Absenkung ihrer Temperatur unterschiedlich temperierten Medien auszusetzen, insbesondere in unterschiedlich temperierte Bäder einzubringen.

Bei einer weiteren Variante des erfindungsgemäßen Wärmebehandlungsverfahrens wird die Temperatur der Wälzlagerbauteile kontinuierlich abgesenkt. Insbesondere wird die Temperatur der Wälzlagerbauteile entsprechend dem Verlauf der Martensit-Starttemperatur abgesenkt. Dadurch kann während der gesamten Dauer der Umwandlung von Austenit in Bainit ein sehr geringer Abstand zur Martensit-Starttemperatur eingehalten werden und die Umwandlung somit bei einer niedrigen Wälzlagerbauteil-Temperatur durchgeführt werden. Dies wirkt sich wiederum positiv auf die erzielbare Härte der Wälzlagerbauteile aus. Bei dieser und auch bei anderen Varianten des erfindungsgemäßen Wärmebehandlungsverfahrens kann die Temperatur der Wälzlagerbauteile mittels einer oder mehrerer steuerbarer Anlagen, insbesondere Öfen, abgesenkt werden. Damit lassen sich nahezu beliebige Temperaturprofile realisieren.

In einer Weiterbildung des erfindungsgemäßen Wärmebehandlungsverfahrens werden die Wälzlagerbauteile nach einer teilweisen Umwandlung des Austenits in Bainit auf eine höhere Temperatur erwärmt, um die Umwandlung zu beschleunigen. Dies stellt eine sehr effiziente Maßnahme zur Verkürzung der insgesamt für die Wärmebehandlung der Wälzlagerbauteile benötigten Zeit dar. Alternativ kann das Zeitintervall der Umwandlung so bemessen werden, dass keine vollständige Umwandlung des Austenits in Bainit erfolgt und die Wälzlagerbauteile im Anschluss an das Zeitintervall der Umwandlung auf Raumtemperatur abgekühlt, kurz gehalten und anschließend angelassen werden.

Das erfindungsgemäße Wärmebehandlungsverfahren lässt sich insbesondere bei Wälzlagerbauteile anwenden, die aus einem durchhärtenden Wälzlager- oder Vergütungsstahl gefertigt sind.

Die Erfindung wird nachstehend anhand der in der Zeichnung dargestellten Ausführungsbeispiele erläutert.

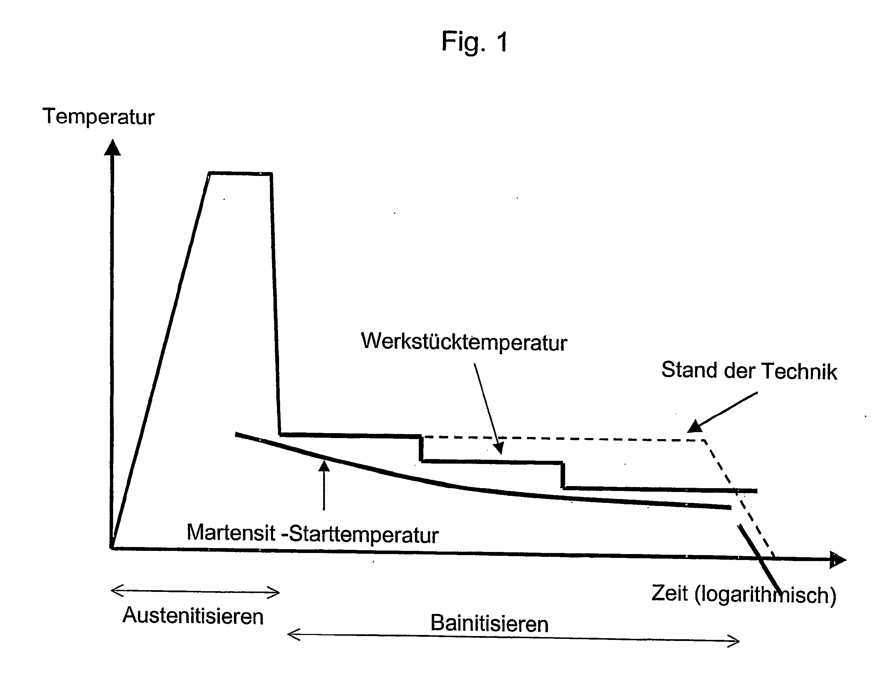

Die Figuren 1 bis 5 zeigen schematisierte Zeit-Temperatur-Diagramme zur Veranschaulichung unterschiedlicher Varianten des erfindungsgemäßen Wärmebehandlungsverfahrens. Auf der Abszisse ist jeweils die Zeit in einem logarithmischen Maßstab aufgetragen. Auf der Ordinate ist jeweils die Werkstücktemperatur aufgetragen.

Das erfindungsgemäße Wärmebehandlungsverfahren wird mit als Wälzlagerbauteile ausgebildeten Werkstücken aus Stahl durchgeführt. Insbesondere eignen sich Werkstücke aus durchhärtenden Wälzlager- bzw. Vergütungsstählen. Ein typischer Vertreter eines Wälzlagerstahls, die in der Norm DIN EN ISO 683-17 definiert sind, ist ein Stahl mit der Bezeichnung 100Cr6. Dieser Stahl enthält, bezogen auf seine Masse, 0,93 bis 1,05 % Kohlenstoff, 1,35 bis 1,60 % Chrom, 0,25 bis 0,45 % Mangan, 0,15 bis 0,35 % Silizium und bis zu 0,1 % Molybdän. Der Phosphorgehalt beträgt maximal 0,025 %, der Schwefelgehalt maximal 0,015 %. Außerdem können herstellungsbedingt noch kleine Mengen an weiteren Elementen enthalten sein.

Vor der Wärmebehandlung werden die Werkstücke einer mechanischen Weichbearbeitung unterzogen, durch welche die Werkstücke in eine gewünschte Form gebracht und als Wälzlagerbauteile ausgebildet werden. Diese Form kann noch um Zugaben für eine weitere mechanische Bearbeitung nach der Wärmebehandlung von der endgültigen Form der Werkstücke abweichen.

Fig. 1 zeigt ein schematisiertes Zeit-Temperatur-Diagramm zur Veranschaulichung einer ersten Variante des erfindungsgemäßen Wärmebehandlungsverfahrens. Die Werkstücke werden zunächst ausgehend von Raumtemperatur auf Austenitisierungstemperatur erwärmt und eine Zeit lang auf dieser Temperatur gehalten. Nach dem Austenitisieren werden die Werkstücke abgeschreckt und dadurch auf eine Temperatur knapp oberhalb der Martensit-Starttemperatur abgekühlt. Unterhalb der Martensit-Starttemperatur bildet sich Martensit. Die Martensit-Bildung ist im Rahmen des erfindungsgemäßen Wärmebehandlungsverfahrens nicht gewünscht, so dass eine Unterschreitung der Martensit-Starttemperatur vermieden wird, solange dies mit dem vorgesehenen Verfahrensablauf vereinbar ist. Das Abschrecken kann vorteilhaft durch Eintauchen der Werkstücke in ein Salzbad erfolgen. Salzbäder haben den Vorteil, dass sie die durch exotherme Reaktionen frei werdende Energie gut abfangen können. Dadurch wird die Werkstofftemperatur in sehr engen Grenzen gehalten. Nach dem Abschrecken findet eine allmähliche Umwandlung des Austenits in Bainit statt. Diese Umwandlung wird auch als Bainit-Umwandlung, Bainit-Härtung oder Bainitisieren bezeichnet. Wie durch eine gestrichelte Linie angedeutet ist, wird die Bainit-Umwandlung gemäß dem Stand der Technik bei einer konstanten Temperatur durchgeführt.

Das erfindungsgemäße Wärmebehandlungsverfahren zeichnet sich dadurch aus, dass die Werkstücktemperatur während der Bainit-Umwandlung abgesenkt wird. Dies wird dadurch ermöglicht, dass die Martensit-Starttemperatur, die möglichst nicht unterschritten werden soll, während der Bainit-Umwandlung ebenfalls abnimmt. Durch die Absenkung der Werkstücktemperatur kann bei durchhärtenden Wälzlagerstählen eine größere Härte von etwa 59 bis 64 HRC erreicht werden, als dies bei einer üblichen isothermen Bainit-Umwandlung der Fall ist. Um einen deutlichen Effekt zu erzielen, wird die Werkstücktemperatur vorzugsweise während wenigstens eines Zeitanteils von 20 % der für die Bainit-Umwandlung vorgesehenen Umwandlungsdauer auf Werte abgesenkt, die unterhalb der durch das Abschrecken erzielten Werkstücktemperatur liegen. Besonders gute Ergebnisse lassen sich bei einem Zeitanteil von wenigstens 80 % der Umwandlungsdauer erzielen.

Bei der in Fig. 1 dargestellten ersten Variante des erfindungsgemäßen Wärmebehandlungsverfahrens erfolgt die Absenkung der Werkstücktemperatur stufenweise. Dies bedeutet, dass die Werkstücktemperatur jeweils eine Zeit lang auf einem konstanten Wert gehalten wird und dann rasch bis knapp über den aktuellen Wert der Martensit-Starttemperatur abgesenkt wird. Es folgen dann wieder ein konstanter Abschnitt und eine erneute Absenkung usw. Ein derartiger Verlauf der Werkstücktemperatur lässt sich beispielsweise mittels mehrerer unterschiedlich temperierter Salzbäder erreichen, in welche die Werkstücke der Reihe nach verbracht werden. Ebenso ist es auch möglich, die Werkstücke zunächst mittels eines Salzbads abzuschrecken und während der ersten Haltephase im Salzbad zu belassen. Anschließend werden die Werkstücke für jede Haltephase in einen anders temperierten Anlassofen, insbesondere einen Luftanlassofen, verbracht. Wenn das für die Bainit-Umwandlung vorgesehene Zeitintervall abgelaufen ist, werden die Werkstücke auf Raumtemperatur abgekühlt.

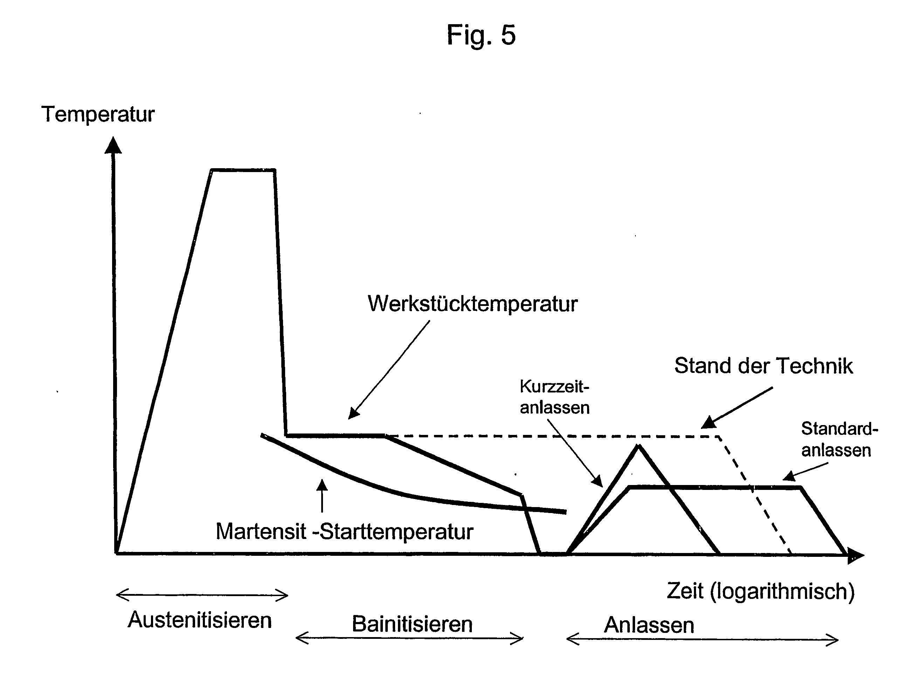

Die im Folgenden beschriebenen Varianten des erfindungsgemäßen Wärmebehandlungsverfahrens unterscheiden sich von der vorstehend beschriebenen ersten Variante bezüglich des Verlaufs der Werkstücktemperatur während der Bainit-Umwandlung und im Falle der in Fig. 5 dargestellten Variante auch nach der Bainit-Umwandlung. Ansonsten gilt das zur ersten Variante Ausgeführte für die weiteren Varianten in analoger Weise.

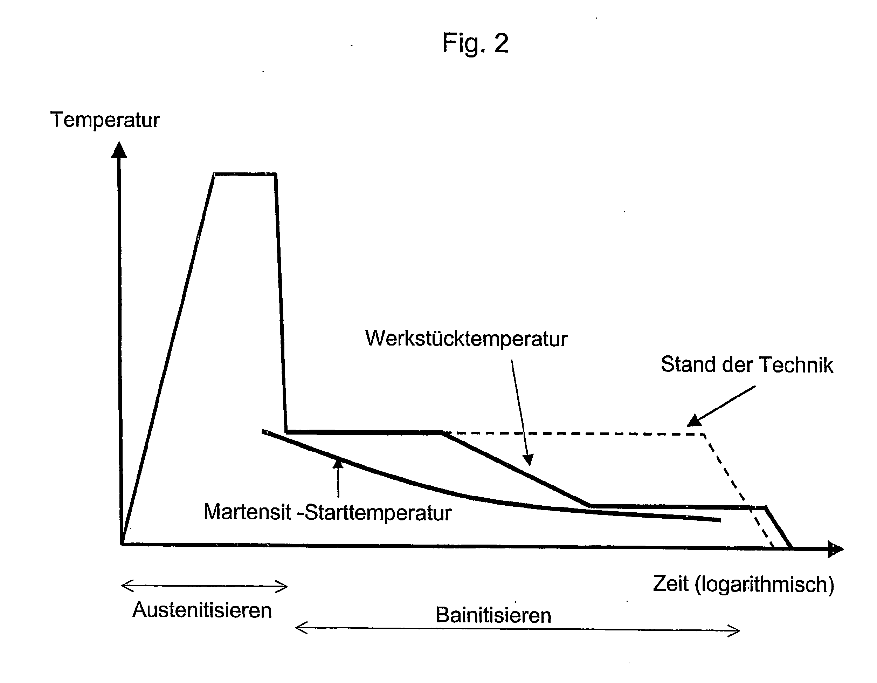

Fig. 2 zeigt ein schematisiertes Zeit-Temperatur-Diagramm zur Veranschaulichung einer zweiten Variante des erfindungsgemäßen Wärmebehandlungsverfahrens. Die zweite Variante zeichnet sich dadurch aus, dass während der Bainit-Umwandlung unmittelbar nach dem Abschrecken der Werkstücke eine Haltephase mit konstanter Werkstücktemperatur vorgesehen ist, an die sich eine Phase mit stetig abnehmender Werkstücktemperatur anschließt. Schließlich folgt noch eine Haltephase mit konstanter Werkstücktemperatur. Außerhalb des für die Bainit-Umwandlung vorgesehenen Zeitintervalls entspricht der Verlauf der Werkstücktemperatur dem für die erste Variante beschriebenen Verlauf.

Zur Realisierung eines derartigen Temperaturverlaufs werden die Werkstücke wiederum zunächst in einem Salzbad abgeschreckt und eine Zeit lang in dem Salzbad belassen. Anschließend werden die Werkstücke jeweils für eine Zeit lang in unterschiedlich temperierte Medien, z. B. Anlassöfen oder Salzbäder, verbracht, die jeweils so gesteuert werden, dass die Werkstücktemperatur in der gewünschten Weise abgesenkt bzw. gehalten wird.

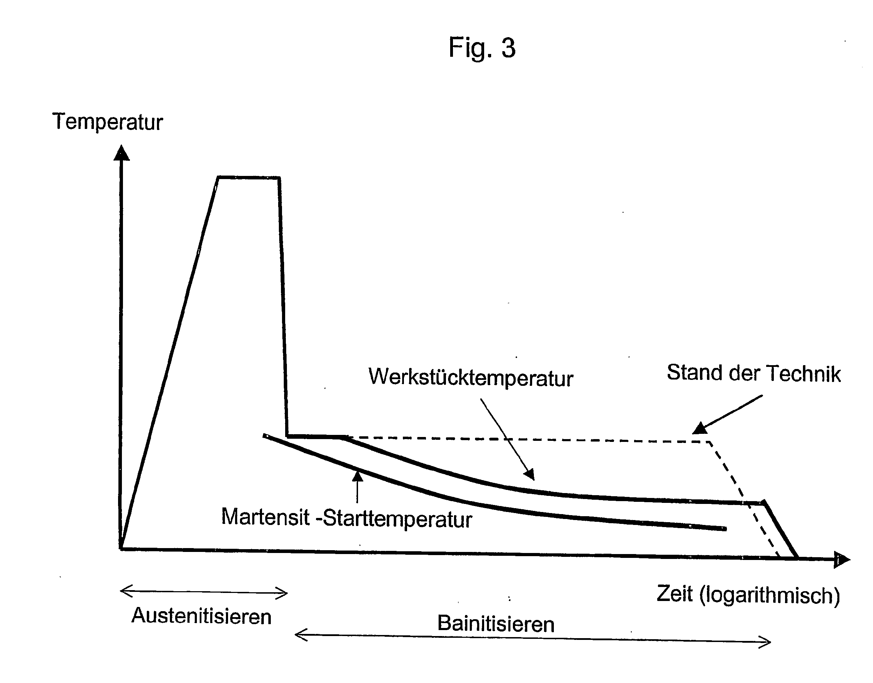

Fig. 3 zeigt ein schematisiertes Zeit-Temperatur-Diagramm zur Veranschaulichung einer dritten Variante des erfindungsgemäßen Wärmebehandlungsverfahrens. Bei der dritten Variante wird die Werkstücktemperatur während der Bainit-Umwandlung im Anschluss an eine kurze Haltephase nach dem Abschreckvorgang kontinuierlich abgesenkt. Die Absenkung erfolgt dabei in entsprechender Weise, wie auch die Martensit-Starttemperatur abnimmt. Dadurch ergibt sich für die Werkstücktemperatur während des für die Bainit-Umwandlung vorgesehenen Zeitintervalls ein zur Martensit-Starttemperatur im Wesentlichen paralleler Verlauf. Zur Realisierung dieses Temperaturverlaufs können die Werkstücke nach dem Abschrecken in einen langen Anlassofen oder temperaturgesteuerten Kammerofen verbracht werden, in dem sich das gewünschte Temperaturprofil einstellen und regeln lässt. Alternativ dazu ist es auch möglich die Werkstücke mit Wasser-LuftGemischen zu behandeln, deren Abschreckwirkung bzw. temperaturabsenkende Wirkung während der Bainit-Umwandlung so gesteuert werden kann, dass sie einer vorgegebenen Abkühlrate folgt.

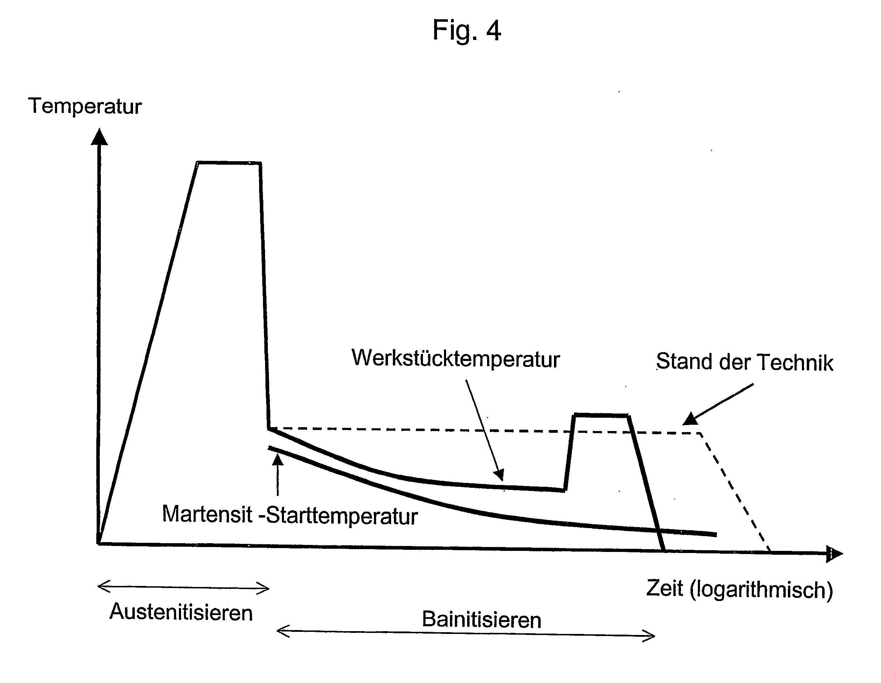

Fig. 4 zeigt ein schematisiertes Zeit-Temperatur-Diagramm zur Veranschaulichung einer Weiterbildung der dritten Variante des erfindungsgemäßen Wärmebehandlungsverfahrens. Bei dieser Weiterbildung wird die Werkstücktemperatur während der Bainit-Umwandlung zunächst analog zu Fig. 3 abgesenkt. Noch vor dem Ende des für die Bainit-Umwandlung vorgesehenen Zeitintervalls wird die Werkstücktemperatur deutlich angehoben und eine Zeit lang konstant gehalten. Der dabei erreichte Temperaturwert ist vorzugsweise höher als die Werkstücktemperatur zu Beginn der Bainit-Umwandlung. Im Anschluss an die konstante Phase wird die Werkstücktemperatur auf Raumtemperatur abgesenkt. Durch das kurzzeitige Anheben der Werkstücktemperatur während der Bainit-Umwandlung wird die Bainit-Umwandlung erheblich beschleunigt und somit die insgesamt für eine vollständige Bainit-Umwandlung benötigte Zeit reduziert.

Auf entsprechende Weise können auch die erste und die zweite Variante des erfindungsgemäßen Wärmebehandlungsverfahrens weitergebildet werden.

Fig. 5 zeigt ein schematisiertes Zeit-Temperatur-Diagramm zur Veranschaulichung einer Weiterbildung der zweiten Variante des erfindungsgemäßen Wärmebehandlungsverfahrens. Diese Weiterbildung zeichnet sich dadurch aus, dass die Werkstücktemperatur bereits nach der ersten Haltephase und der ersten Absenkphase, die bei der zweiten Variante während des für die Bainit-Umwandlung vorgesehenen Zeitintervalls durchgeführt werden, auf Raumtemperatur abgesenkt wird. Nach einer kurzen Haltedauer bei Raumtemperatur folgt ein Kurzzeit- oder Standard-Anlassen. Hierzu werden die Werkstücke vorzugsweise auf eine Temperatur erwärmt, die zwischen der Werkstücktemperatur zu Beginn der Bainit-Umwandlung und der Werkstücktemperatur unmittelbar vor Unterbrechung der Bainit-Umwandlung liegt und anschließend wieder auf Raumtemperatur abgekühlt. Durch diese Vorgehensweise verkürzt sich die für die Wärmebehandlung insgesamt benötigte Zeit verglichen mit der in Fig. 2 dargestellten zweiten Variante des erfindungsgemäßen Wärmebehandlungsverfahrens. Dabei wird in Kauf genommen, dass auch Martensit als Gefügebestandteil auftritt.

Die in Fig. 5 dargestellte Weiterbildung lässt sich in analoger Weise auch auf die erste und die dritte Variante des erfindungsgemäßen Wärmebehandlungsverfahrens übertragen.

Neben den explizit beschriebenen Verläufen der Werkstücktemperatur sind im Rahmen des erfindungsgemäßen Wärmebehandlungsverfahrens auch weitere Verläufe möglich, die jeweils darin übereinstimmen, dass die Werkstücktemperatur während des für die Bainit-Umwandlung vorgesehenen Zeitintervalls abgesenkt wird.

## Patentansprüche

1. Verfahren zur Wärmebehandlung von Wälzlagerbauteilen aus Stahl, wobei die Wälzlagerbauteile nach einer Haltedauer bei oder oberhalb der Austenitisierungstemperatur auf eine Temperatur oberhalb der Martensit-Starttemperatur, bei deren Unterschreitung Martensit gebildet wird, abgeschreckt werden und in einem sich anschließenden Zeitintervall eine Umwandlung von Austenit in Bainit erfolgt, **dadurch gekennzeichnet, dass** die Temperatur der Wälzlagerbauteile während des Zeitintervalls der Umwandlung abgesenkt und die Umwandlung von Austenit in Bainit dabei fortgesetzt wird.

2. Verfahren nach. Anspruch 1, **dadurch gekennzeichnet, dass** die Temperatur der Wälzlagerbauteile wenigstens während eines Zeitanteils von 20 % der Umwandlungsdauer auf Werte unterhalb der Temperatur abgesenkt wird, die durch das Abschrecken erzielt wird.

3. Verfahren nach einem der vorhergehenden Ansprüche, **dadurch gekennzeichnet, dass** die Temperatur der Wälzlagerbauteile abhängig von der Martensit-Starttemperatur abgesenkt wird.

4. Verfahren nach einem der vorhergehenden Ansprüche, **dadurch gekennzeichnet, dass** die Temperatur der Wälzlagerbauteile jeweils auf Werte oberhalb der Martensit-Starttemperatur abgesenkt wird.

5. Verfahren nach einem der vorhergehenden Ansprüche, **dadurch gekennzeichnet, dass** die Temperatur der Wälzlagerbauteile gemäß einem vorgegebenen Temperaturprofil abgesenkt wird.

6. Verfahren nach einem der vorhergehenden Ansprüche, **dadurch gekennzeichnet, dass** die Temperatur der Wälzlagerbauteile stufenweise abgesenkt wird.

7. Verfahren nach Anspruch 6, **dadurch gekennzeichnet, dass** die Wälzlagerbauteilezur Absenkung ihrer Temperatur unterschiedlich temperierten Medien ausgesetzt werden, insbesondere in unterschiedlich temperierte Bäder eingebracht werden.

8. Verfahren nach einem der Ansprüche 1 bis 5, **dadurch gekennzeichnet, dass** die Temperatur der Wälzlagerbauteile kontinuierlich abgesenkt wird.

9. Verfahren nach Anspruch 8, **dadurch gekennzeichnet, dass** die Temperatur der Wälzlagerbauteile entsprechend dem Verlauf der Martensit-Starttemperatur abgesenkt wird.

10. Verfahren nach einem der vorhergehenden Ansprüche, **dadurch gekennzeichnet, dass** die Temperatur der Wälzlagerbauteile mittels einer oder mehrerer steuerbarer Anlagen, insbesondere Öfen, abgesenkt wird.

11. Verfahren nach einem der vorhergehenden Ansprüche, **dadurch gekennzeichnet, dass** die Wälzlagerbauteile nach einer teilweisen Umwandlung des Austenits in Bainit auf eine höhere Temperatur erwärmt werden, um die Umwandlung zu beschleunigen.

12. Verfahren nach einem der Ansprüche 1 bis 10, **dadurch gekennzeichnet, dass** das Zeitintervall der Umwandlung so bemessen wird, dass keine vollständige Umwandlung des Austenits in Bainit erfolgt und die Wälzlagerbauteile im Anschluss an das Zeitintervall der Umwandlung auf Raumtemperatur abgekühlt, kurz gehalten und anschließend angelassen werden.

13. Verfahren nach einem der vorhergehenden Ansprüche, **dadurch gekennzeichnet, dass** die Wälzlagerbauteile aus einem durchhärtenden Wälzlager- oder Vergütungsstahl gefertigt sind.

## Claims

1. Method for the heat treatment of rolling bearing components made of steel, wherein, after a holding period at or above the austenitization temperature, the rolling bearing components are quenched to a temperature above the martensite starting temperature below which martensite is formed, and a transformation of austenite into bainite takes place in a subsequent time period, **characterized in that** the temperature of the rolling bearing components is reduced during the time period in which transformation occurs and the transformation of austenite into bainite is thus continued.

2. Method according to Claim 1, **characterized in that** the temperature of the rolling bearing components is reduced to values below the temperature which is obtained by the quenching at least for a time fraction of 20% of the transformation period.

3. Method according to either of the preceding claims, **characterized in that** the temperature of the rolling bearing components is reduced depending on the martensite starting temperature.

4. Method according to one of the preceding claims, **characterized in that** the temperature of the rolling bearing components is reduced in each case to values above the martensite starting temperature.

5. Method according to one of the preceding claims, **characterized in that** the temperature of the rolling bearing components is reduced in accordance with a predefined temperature profile.

6. Method according to one of the preceding claims, **characterized in that** the temperature of the rolling bearing components is reduced in stages.

7. Method according to Claim 6, **characterized in that**, in order for their temperature to be reduced, the rolling bearing components are exposed to differently temperature-controlled media, in particular are introduced into differently temperature-controlled baths.

8. Method according to one of Claims 1 to 5, **characterized in that** the temperature of the rolling bearing components is reduced continuously.

9. Method according to Claim 8, **characterized in that** the temperature of the rolling bearing components is reduced in a manner corresponding to the progression of the martensite starting temperature.

10. Method according to one of the preceding claims, **characterized in that** the temperature of the rolling bearing components is reduced by means of one or more controllable systems, in particular furnaces.

11. Method according to one of the preceding claims, **characterized in that**, following partial transformation of the austenite into bainite, the rolling bearing components are heated to a higher temperature in order to accelerate the transformation.

12. Method according to one of Claims 1 to 10, **characterized in that** the time period for the transformation is such that complete transformation of the austenite into bainite does not take place, and, following the time period for the transformation, the rolling bearing components are cooled to room temperature, briefly kept at room temperature and then tempered.

13. Method according to one of the preceding claims, **characterized in that** the rolling bearing components are produced from a fully hardening rolling bearing steel or heat-treated steel.

## Revendications

1. Procédé pour traiter thermiquement des pièces de roulement en acier, dans lequel on trempe les pièces de roulement, après une durée de maintien à ou au-dessus de la température d'austénitisation, à une température supérieure à la température de début de martensite, dont le franchissement descendant provoque la formation de martensite, et il se produit, au cours d'un intervalle de temps qui suit, une transformation de l'austénite en bainite, **caractérisé en ce que** l'on abaisse la température des pièces de roulement pendant l'intervalle de temps de la transformation et on poursuit ainsi la transformation de l'austénite en bainite.

2. Procédé selon la revendication 1, **caractérisé en ce que** l'on abaisse la température des pièces de roulement pendant au moins une fraction de temps de 20% de la durée de transformation à des valeurs inférieures à la température qui est atteinte par la trempe.

3. Procédé selon l'une quelconque des revendications précédentes, **caractérisé en ce que** l'on abaisse la température des pièces de roulement en fonction de la température de début de martensite.

4. Procédé selon l'une quelconque des revendications précédentes, **caractérisé en ce que** l'on abaisse la température des pièces de roulement chaque fois à des valeurs supérieures à la température de début de martensite.

5. Procédé selon l'une quelconque des revendications précédentes, **caractérisé en ce que** l'on abaisse la température des pièces de roulement selon un profil de température prédéterminé.

6. Procédé selon l'une quelconque des revendications précédentes, **caractérisé en ce que** l'on abaisse la température des pièces de roulement de manière étagée.

7. Procédé selon la revendication 6, **caractérisé en ce que** l'on expose les pièces de roulement à des milieux à températures différentes pour l'abaissement de leur température, en particulier on les introduit dans des bains à des températures différentes.

8. Procédé selon l'une quelconque des revendications 1 à 5, **caractérisé en ce que** l'on abaisse la température des pièces de roulement de façon continue.

9. Procédé selon la revendication 8, **caractérisé en ce que** l'on abaisse la température des pièces de roulement selon la courbe de la température de début de martensite.

10. Procédé selon l'une quelconque des revendications précédentes, **caractérisé en ce que** l'on abaisse la température des pièces de roulement au moyen d'une ou de plusieurs installations réglables, en particulier des fours.

11. Procédé selon l'une quelconque des revendications précédentes, **caractérisé en ce que** l'on chauffe les pièces de roulement à une température plus élevée, après une transformation partielle de l'austénite en bainite, afin d'accélérer la transformation.

12. Procédé selon l'une quelconque des revendications 1 à 10, **caractérisé en ce que** l'on définit l'intervalle de temps de la transformation de telle manière qu'il ne se produise pas de transformation complète de l'austénite en bainite et que les pièces de roulement soient, à la suite de l'intervalle de temps de la transformation, refroidies à la température ambiante, maintenues brièvement et ensuite revenues.

13. Procédé selon l'une quelconque des revendications précédentes, **caractérisé en ce que** les pièces de roulement sont fabriquées en un acier pour roulements ou un acier de traitement trempant.
